# EUROPEAN PATENT SPECIFICATION

(11) **EP 2 301 809 B1**
(45) Date of publication and mention of the grant of the patent: **12.06.2013**
(21) Application number: 08791463.6
(22) Date of filing: 23.07.2008
(51) Int. Cl.: B60R 19/34, F16F 7/12

(54) **IMPACT ABSORPTION MEMBER**
AUFPRALLABSORBIERENDES GLIED
ELÉMENT D ABSORPTION DE CHOCS

(43) Date of publication of application: 30.03.2011
(73) Proprietor: Toyotomi Kiko Co., Ltd., Aichi 446-8558 (JP); Aisin Seiki Kabushiki Kaisha, Aichi-ken 448-8650 (JP)
(72) Inventor: KANAYA, Takakuni, Anjo-shi Aichi 446-8558 (JP); DEMIZU, Hiroyuki, Anjo-shi Aichi 446-8558 (JP); HODOYA, Kohei, Kariya-shi Aichi 448-8650 (JP)
(74) Representative: Kramer - Barske - Schmidtchen
(86) International application number: PCT/JP2008/063206
(87) International publication number: WO 2010/010618

(56) References cited:
- DE-A1-102007 035 483
- JP-A- 10 007 032
- JP-A- 2000 081 069
- JP-U- 52 123 926

## Description

### Technical Field

The present invention relates to an impact absorbing member used by being attached to a vehicle, which deforms compressively in an axial direction and absorbs impact energy during collision of the vehicle.

### Background Art

Japanese Patent Application Publication No. 2000-81069 discloses an impact absorbing member comprising a tube wall that configures a tube, and flange members extending outward from an outer circumference of the tube wall and also extending in an axial direction of the tube. In a case where this impact absorbing member is subjected to a compressive load in the axial direction upon collision of the vehicle, the tube wall and flange members deform compressively along the axial direction by buckling. This impact absorbing member comprises a first main body and a second main body. Each of the first main body and second main body comprises a partial tube wall in which the tube wall is divided in a circumferential direction, and flange members extending toward the outer side of the tube from both ends in the circumferential direction of the partial tube wall, and also extending in the axial direction of the tube. The impact absorbing member is formed by joining the flange members of the first main body and the flange members of the second main body. The flange members of the first main body and the flange members of the second main body make contact across their entire surfaces.

In the impact absorbing member of Patent Document 1 cited above, the deformation process during compressive deformation (e.g. a location where buckling occurs or a state during deformation) is not constant. Consequently, the deformation process is not necessarily the same even if the impact absorbing members are manufactured in the same shape. As a result, the relationship between the compressive load on the impact absorbing member and the degree of compressive deformation is not constant, and a large variation between products ensues.

JP2000-81069 A (closest prior art) discloses an impact absorbing member comprising a first main body including a first partial tube wall and a first flange member, and a second main body including a second partial tube wall and a second flange member.

Japanese utility model application No. 51.32050 discloses a space formed by beads that are provided on a floor panel and a frame at a connection position of the floor panel and a flange member of the frame.

### Disclosure of the invention

### Problem to be solved by the invention

The present invention was made in light of the circumstances described above and aims to present, in an impact absorbing member comprising a tube wall and flange members, a technique that reduces variation between products in the relationship between the compressive load on the impact absorbing member and the degree of compressive deformation.

### Means to solve the problem

A solution of the problem as discussed above is achieved with an impact absorbing member according to appended claim 1.
Appended claims 2 to 4 are directed towards advantageous embodiments of the inventive impact absorbing member.

The impact absorbing member of the present invention comprises a tube wall and flange members. The tube wall composes a tube. The flange members extend outward from an outer circumference of the tube wall and also extend in an axial direction of the tube. One end of the impact absorbing member in the axial direction is attached to a main body of a vehicle. Upon collision of the vehicle, the tube wall and the flange members of the impact absorbing member are deformed compressively along the axial direction.
The impact absorbing member of the present invention comprises at least a first main body and a second main body. The first main body comprises a first partial tube wall and first flange members. The first partial tube wall composes a partial tube wall dividing the tube wall in a circumferential direction. The first flange members extend toward an outer side of the tube from both ends in a circumferential direction of the first partial tube wall, and also extend in the axial direction of the tube. The second main body comprises a second partial tube wall and second flange members. The second partial tube wall composes a partial tube wall dividing the tube wall in a circumferential direction. The second flange members extend toward the outer side of the tube from both ends in a circumferential direction of the second partial tube wall, and also extend in the axial direction of the tube. The first flange members and the second flange members are joined intermittently in the axial direction of the tube. At least one of sections where the first flange members and the second flange members are not joined in the axial direction of the tube, a space is formed between a first partial tube wall side end part of the first flange members and a second partial tube wall side end part of the second flange members.

To reduce variation in the relationship between the compressive load on the impact absorbing member and the degree of compressive deformation, it is important to reduce variation in the deformation state and the buckling location of the flange member. In this impact absorbing member, a space is formed at a predetermined location in the axial direction between the first partial tube wall side end part of the first flange members and the second partial tube wall side end part of the second flange members. The first flange members and the second flange members are not joined at the location where this space is formed. When a compressive load is applied in the axial direction of the impact absorbing member, the tube wall deforms so that the space formed between the first partial tube wall side end part of the first flange members and the second partial tube wall side end part of the second flange members closes in an axial direction of a tube body and in a circumferential direction of the tube body. An outer end part of the first flange member and an outer end part of the second flange member thereby move away from each other in the location where the space is formed, and the outer end part of the first flange member and the outer end part of the second flange member deform in an opening direction. The first flange member and second flange member thereby begin to deform at the same location (the location where the space is formed). In a case where further compressive load is applied from this state, further deformation occurs at the location where deformation had already started, and both the flange member buckle and are compressed in the axial direction of the tube.
According to this impact absorbing member, buckling progresses in sequence at the location where the space is formed. Junction points between the first flange memebers and second flange members remain in the same plane before and after buckling; i.e., the deformation process of the impact absorbing member is stabilized.
According to this impact absorbing member, variation between products in the location where buckling of the flange members occurs and variation in the deformation state or deformation process can be reduced. Variation between products in the relationship between the compressive load on the impact absorbing member and the degree of compressive deformation may thereby be reduced.

In this impact absorbing member, it is preferred that one space is formed in each of the sections where the first flange members and the second flange members are not joined in the axial direction of the tube. It is preferred that a space located furthest from the main body of the vehicle is larger than the other spaces.
In the impact absorbing member, during an initial stage of the application of the compressive load, a large load is applied close to a location where the load is acting, i.e. a location furthest from the main body of the vehicle. In this impact absorbing member, the space furthest from the main body of the vehicle may be larger than the other spaces. Consequently, the space furthest from the main body of the vehicle yields to deformation more easily than the other spaces. Variation in the deformation location of the flange members during initial application of the compressive load may thereby be reduced. Consequently, variation between products in the relationship between the compressive load on the impact absorbing member and the degree of compressive deformation may reliably be reduced.

In this impact absorbing member, it is preferred that the spaces become smaller as they become more distant from the tube wall.
According to this configuration, the outer end part of the first flange member and the outer end part of the second flange member easily move apart; i.e., the first flange member and the second flange member easily deform at the location where the space is formed. The flange members may thereby be more reliably made to deform at the desired location.

### Effect of the Invention

According to the present invention, variation between impact absorbing members in the relationship between the compressive load on the impact absorbing member and the degree of compressive deformation can be reduced. Variation in the impact energy absorption performance of the impact absorbing members between products can thereby be reduced.

### Brief Description of the Drawings

Fig. 1 is a plan view of an impact absorbing member of a present embodiment.
Fig. 2 is a side view of the impact absorbing member of the present embodiment.
Fig. 3 is a cross-sectional view along the cross-section III-III of Fig. 1.
Fig. 4 is a cross-sectional view along the cross-section IV-IV of Fig. 1.
Fig. 5 is a perspective view of a part of a variant of the impact absorbing member.
Fig. 6 is a perspective view of a part of a variant of the impact absorbing member.
Fig. 7 is a perspective view of a part of a variant of the impact absorbing member.

### Best Modes for Carrying Out the Invention

Some technical features of the present invention are listed below.
(First feature) The impact absorbing member may further comprise a third main body in addition to the first main body and second main body. In this case, the third main body may comprise a third partial tube wall configuring a partial tube wall in which a tube wall is divided in a circumferential direction, and a pair of third flange members formed at each of both ends in the circumferential direction of the third partial tube wall.

In this case, second flange members may join with first flange members. Third flange members may join with the second flange members. The first flange members may join with the third flange members. A tube may be composed of the first partial tube wall, second partial tube wall, and third partial tube wall.
(Second feature) A fourth main body, fifth main body, etc. may be provided. The number of members constituting the tube wall may be varied as desired.
(Third feature) In a case where there are three members constituting the tube wall, the first flange members and third flange members may be joined intermittently in the axial direction of the tube. The second flange members and third flange members may be joined intermittently in the axial direction of the tube. In a part of a section where the first flange members and third flange members are not joined in the axial direction of the tube, a space may be formed between the first partial tube wall side end part of the first flange members and the third partial tube wall side end part of the third flange members. In a part of a section where the second flange member and third flange member are not joined in the axial direction of the tube, a space may be formed between the second partial tube wall side end part of the second flange member and the third partial tube wall side end part of the third flange member. According to this configuration, variation between impact absorbing members in the relationship between the compressive load on the impact absorbing member and the degree of compressive deformation can be reduced.
(Fourth feature) One space between the first flange member and second flange member (the space between a pair of joined flange members) may be formed for each of non-joined sections, or two or more spaces per such sections may be formed. Further, the number of spaces per section may differ among the sections. Further, sections without a space may be present. According to these configurations as well, variation between impact absorbing members in the relationship between the compressive load on the impact absorbing member and the degree of compressive deformation can be reduced.

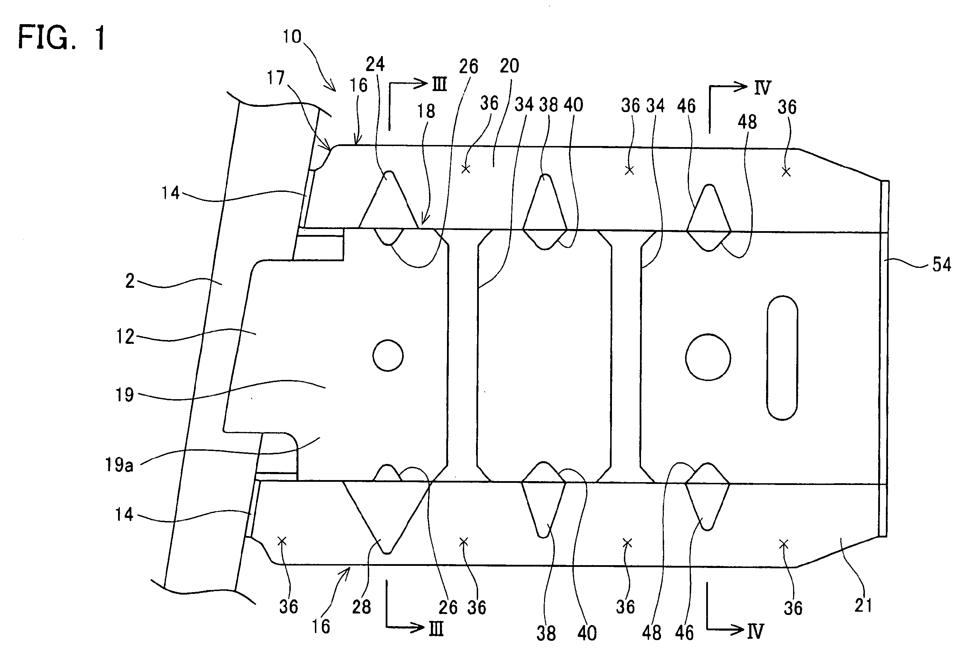

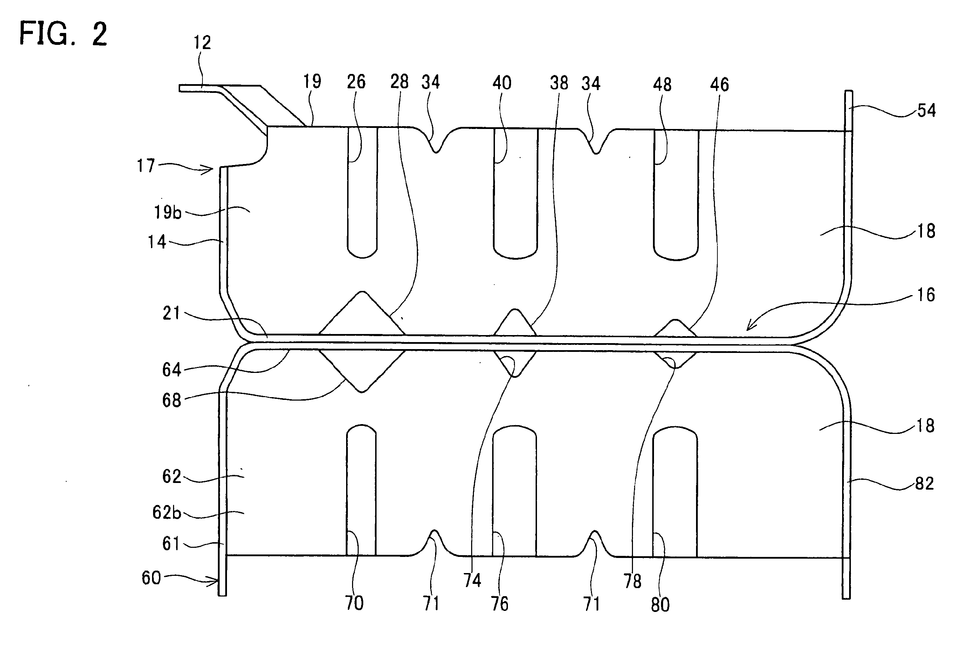

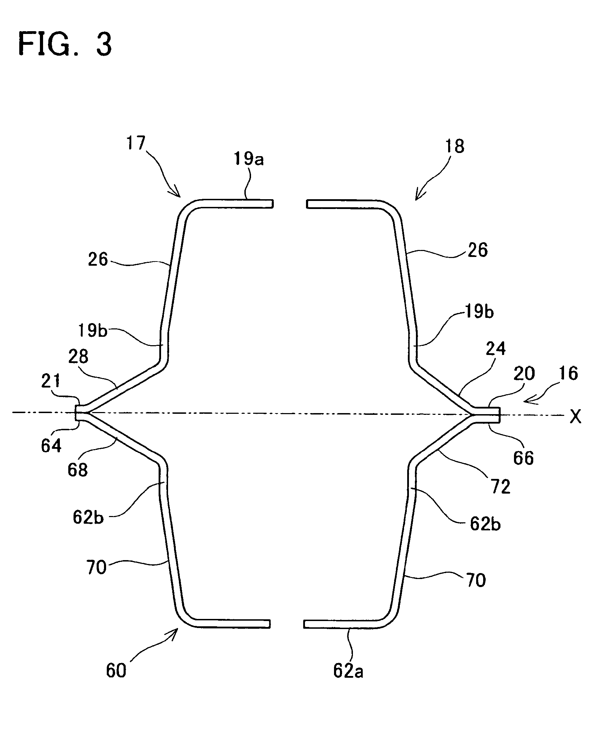

An impact absorbing member of the present embodiment in which the present invention may be realized will be explained with reference to the figures. Fig. 1 is a plan view of an impact absorbing member 10 of the present embodiment. Fig. 2 is a side view of the impact absorbing member 10. Fig. 3 is a cross-sectional view along the cross-section III-III of Fig. 1.
For example, the impact absorbing member 10 is attached to front and rear ends of a vehicle such as an automobile. In the present embodiment, the impact absorbing member 10 attached to a front side of a vehicle will be described.
As shown in Figs. 1, 2 and 3, the impact absorbing member 10 comprises a tube wall 18 and flange members 16. The tube wall 18 is configured as a square tube. The flange members 16 extend outward from an outer circumference of the tube wall 18. The flange members 16 also extend in an axial direction of the tube wall 18.
The impact absorbing member 10 comprises a first main body 17 and a second main body 60.

The first main body 17 comprises a first partial tube wall 19 and first flange members 20, 21. The first partial tube wall 19 includes an upper wall 19a and two first side walls 19b. The first side walls 19b extend downward from left and right ends of the upper wall 19a (ends located along a direction perpendicular to the axial direction of the tube wall 18). The first partial tube wall 19 forms an upper half of the tube wall 18. An upper flange member 12 and a front flange member 14 are formed at a front end (the front end in a vehicle's direction of movement) in an axial direction of the first partial tube wall 19. The upper flange member 12 and front flange member 14 is connected to a front bumper 2 of the vehicle. The upper flange member 12 is connected to an upper surface of a front bumper 2. The upper flange member 12 is joined to the front bumper 2 by spot welding. The front flange member 14 is connected to a rear surface of the front bumper 2. The front flange member 14 is joined to the front bumper 2 by spot welding. A rear flange member 54 is formed at a rear end of the first partial tube wall 19 (the rear end in the vehicle's direction of movement). The rear flange member 54 is connected to a main body of the vehicle, e.g. a side member. The rear flange member 54 is joined to the main body of the vehicle by spot welding.

Two upper grooves 34 which are concaved towards their lower side are formed in the upper wall 19a of the first partial tube wall 19. The two upper grooves 34 are mutually parallel with a space between the two in the axial direction of the tube wall 18. Each of the upper grooves 34 is perpendicular to the axial direction of the tube wall 18. Each of the upper grooves 34 is formed across the entire width of the upper wall 19a in a widthwise direction (the direction perpendicular to the axial direction of the tube wall 18).
In each of the first side walls 19b, an upper vertical groove 26 is formed in front of the upper grooves 34 located at the front. The upper vertical grooves 26 are concaved towards an inner side of the tube wall 18. Each of the upper vertical grooves 26 is formed at the same location relative to the axial direction of the tube wall 18. The upper vertical grooves 26 extend downward from upper ends of the first side walls 19b. Lower ends of the upper vertical grooves 26 are located above lower ends of the first side walls 19b. An upper vertical groove 40 is formed between the two upper grooves 34 in each of the first side walls 19b. The upper vertical grooves 40 are concaved towards the inner side of the tube wall 18. The upper vertical grooves 40 are parallel to the upper vertical grooves 26. The length of the upper vertical groove 40 in a vertical direction is approximately the same as the length of the upper vertical groove 26 in a vertical direction. The width and depth of the upper vertical groove 40 is greater than that of the upper vertical groove 26. Further, in each of the first side walls 19b, an upper vertical groove 48 is formed to the rear of the upper grooves 34 located at the rear. The upper vertical grooves 48 are parallel to the upper vertical grooves 26. The length of the upper vertical groove 48 in a vertical direction is approximately the same as the length of the upper vertical groove 26 in the vertical direction. The width and depth of the upper vertical groove 48 is approximately the same as those of the upper vertical groove 40.

The first flange member 20 is formed at a lower end of one of the first side walls 19b. The first flange member 20 extends toward the outer side of the tube wall 18. Further, the first flange member 20 extends along the axial direction of the tube wall 18. The first flange member 21 is formed at a lower end of the other of the first side walls 19b. The first flange member 21 extends toward the outer side of the tube wall 18. Further, the first flange member 21 extends along the axial direction of the tube wall 18. The first flange member 21 is longer than the first flange member 20 in the axial direction of the tube wall 18. Further, the first flange member 21 has approximately the same length as the first flange member 20 in the direction perpendicular to the axial direction of the tube wall 18. Front ends of the first flange members 20, 21 connect to the front flange member 14. Rear ends of the first flange members 20, 21 connect to the rear flange member 54.

An upper first bead 28 is formed on the first flange member 21 below the upper vertical groove 26. The upper first bead 28 is cross-sectionally triangular in the axial direction of the tube wall 18. As shown in Fig. 3, the height of the upper first bead 28 gradually decreases from an end of the upper first bead 28 at the first side wall 19b side of the first flange member 21 toward the outer side of the first tube wall 18. An upper second bead 24 is formed on the first flange member 20 below the upper vertical groove 26. The upper second bead 24 is formed in the same location as the upper first bead 28 in the axial direction of the tube wall 18. The upper second bead 24 is cross-sectionally triangular in the axial direction of the tube wall 18. As shown in Fig. 3, the height of the upper second bead 24 gradually decreases from an end of the upper second bead 24 at the first side wall 19b side of the first flange member 20 toward the outer side of the first tube wall 18. The dimensions of the upper second bead 24 (height in the vertical direction, width in the axial direction of the tube wall 18, length in the direction perpendicular to the axial direction of the tube wall 18) are smaller than those of the upper first bead 28.

An upper third bead 38 is formed on each of the first flange members 20, 21 below the upper vertical groove 40. The upper third bead 38 is cross-sectionally triangular in the axial direction of the tube wall 18. The height of the upper third bead 38 gradually decreases from an end of the upper third bead 38 at the first side wall 19b side of the first flange members 20, 21 toward the outer side of the first tube wall 18. The upper third beads 38 are formed in the same location in the axial direction of the tube wall 18. Further, the upper third beads 38 have the same shape and dimensions. The dimensions of the upper third bead 38 are smaller than those of the upper second bead 24.

An upper fourth bead 46 is formed on each of the first flange members 20, 21 below the upper vertical groove 48. The upper fourth bead 46 is cross-sectionally triangular in the axial direction of the tube wall 18. The height of the upper fourth bead 46 gradually decreases from an end of the upper fourth beads 46 at the first side wall 19b side of the first flange members 20, 21 toward the outer side of the first tube wall 18. The upper fourth beads 46 are formed in the same location in the axial direction of the tube wall 18. Further, the upper fourth beads 46 have the same shape and dimensions. The dimensions of the upper fourth beads 46 are smaller than those of the upper third beads 38. The dimensions of the upper fourth beads 46 may be the same as those of the upper third beads 38.

As shown in Fig. 2, the second main body 60 is disposed below the first main body 17. As shown in Fig. 3, the second main body 60 comprises a second partial tube wall 62 and second flange members 64, 66. The second partial tube wall 62 is composed of a lower wall 62a and two second side walls 62b. The second side walls 62b extend upward from left and right ends of the lower wall 62a. The second partial tube wall 62 forms a lower half of the tube wall 18. The square tube is composed of the first partial tube wall 19 and the second partial tube wall 62 of the tube wall 18. As shown in Fig. 2, a front flange member 61 connected to the front bumper 2 is formed at a front side of the second partial tube wall 62. The front flange member 61 is connected to the rear surface of the front bumper 2. The front flange member 61 is joined to the front bumper 2 by spot welding. A rear flange member 82 is formed at a rear end of the second partial tube wall 62. The rear flange member 82 is connected to the main body of the vehicle. The rear flange member 82 is joined to the main body of the vehicle by spot welding.

Two lower grooves 71 which are concaved towards their upper side are formed in the lower wall 62a of the second partial tube wall 62. The two lower grooves 71 are mutually parallel with a space between the two in the axial direction of the tube wall 18. Each of the lower grooves 71 is perpendicular to the axial direction of the tube wall 18. Each of the lower grooves 71 is formed across the entire width of the lower wall 62a in the widthwise direction. Each of the lower groove 71 faces the respective upper groove 34 formed in the upper wall 19a.
In each of the second side walls 62b, a lower vertical groove 70 is formed in front of the lower groove 71 located at the front. The lower vertical grooves 70 are concaved towards the inner side of the tube wall 18. The lower vertical grooves 70 formed in the second side walls 62b are formed at the same location relative to the axial direction of the tube wall 18. Further, each of the lower vertical grooves 70 is formed at a location corresponding to the respective upper vertical groove 26 formed in the first side walls 19b. The lower vertical grooves 70 extend upward from lower ends of the second side walls 62b. Upper ends of the lower vertical grooves 70 are located below upper ends of the second side walls 62b. The lower vertical grooves 70 have approximately the same width, depth, and length in the vertical direction as the upper vertical grooves 26.

A lower vertical groove 76 is formed between the two lower grooves 71 in each of the second side walls 62b. The lower vertical grooves 76 are concaved towards the inner side of the tube wall 18. The lower vertical grooves 76 are formed parallel to the lower vertical grooves 70. Each of the lower vertical grooves 76 formed in the second side walls 62b is formed at the same location relative to the axial direction of the tube wall 18. Further, each of the lower vertical grooves 76 is formed at a location corresponding to the upper vertical groove 40 formed in the first side wall 19b. The lower vertical grooves 76 extend upward from lower ends of the second side walls 62b. The length of the lower vertical grooves 76 in the vertical direction is approximately the same as that of the lower vertical grooves 70. The width and depth of the lower vertical grooves 76 are greater than those of the lower vertical grooves 70, and are approximately the same as those of the upper vertical grooves 40. Further, a lower vertical groove 80 is formed in each of the second side walls 62b at a rear side of the lower grooves 71 located at the rear. The lower vertical grooves 80 are concaved towards the inner side of the tube wall 18. The lower vertical grooves 80 are parallel to the lower vertical grooves 70. The lower vertical grooves 80 formed in the second side walls 62b are formed at the same location relative to the axial direction of the tube wall 18. Further, each of the lower vertical grooves 80 is formed at a location corresponding to the respective upper vertical groove 48 formed in the first side walls 19b. The lower vertical grooves 80 extend upward from lower ends of the second side walls 62b. The length of the lower vertical grooves 80 is approximately the same as that of the lower vertical grooves 70. The width and depth of the lower vertical grooves 80 are approximately the same as those of the upper vertical grooves 48.

The second flange member 64 is formed at an upper end of one of the second side walls 62b. The second flange member 64 extends toward the outer side of the tube wall 18. Further, the second flange member 64 extends along the axial direction of the tube wall 18. The second flange member 64 faces the first flange member 21. The second flange member 66 is formed at an upper end of the other of the second side walls 62b. The second flange member 66 extends toward the outer side of the tube wall 18. Further, the second flange member 66 extends along the axial direction of the tube wall 18. The second flange member 66 faces the first flange member 20. The second flange member 64 is longer than the second flange member 66. The second flange member 64 has approximately the same length as the first flange member 21 in the axial direction of the tube wall 18. The second flange member 66 has approximately the same length as the first flange member 21 in the axial direction of the tube wall 18. Further, the second flange member 64 has approximately the same length as the second flange member 66 and the first flange member 21 in the direction perpendicular to the axial direction of the tube wall 18. Front ends of the second flange members 64, 66 connect to the front flange member 61. Rear ends of the second flange members 64, 66 connect to the rear flange member 82.

A lower first bead 68 is formed on the second flange member 64 above the lower vertical groove 70. The lower first bead 68 is formed below the upper first bead 28. The lower first bead 68 has shape and dimensions symmetric to those of the upper first bead 28, with respect to a boundary X (see Fig. 3) between the first main body 17 and the second main body 60. The upper first bead 28 and lower first bead 68 form a space between a first side wall 19b side end part of the first flange member 21 and a second side wall 62b side end part of the second flange member 64.
A lower second bead 72 is formed on the second flange member 66 above the lower vertical groove 70. The lower second bead 72 is formed below the upper second bead 24. The lower second bead 72 has a shape and dimensions symmetric to those of the upper second bead 24, with respect to the boundary X. The upper second bead 24 and lower second bead 72 form a space between a first side wall 19b side end part of the first flange member 20 and a second side wall 62b side end part of the second flange member 66.

A lower third bead 74 is formed on each of the second flange members 64, 66 above the lower vertical groove 76. Each of the lower third beads 74 is formed below the respective upper third bead 38. The lower third bead 74 has a shape and dimensions symmetric to those of the upper third bead 38, with respect to the boundary X. The upper third bead 38 and lower third bead 74 form a space between a first side wall 19b side end part of the first flange member 21 and a second side wall 62b side end part of the second flange member 64. Further, the upper third bead 38 and lower third bead 74 form a space between the first side wall 19b side end part of the first flange member 20 and the second side wall 62b side end part of the second flange member 66.

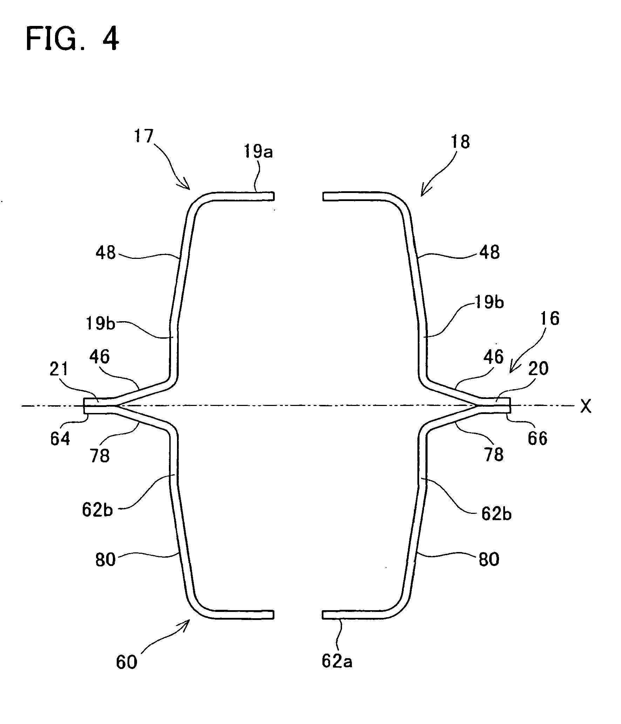

Fig. 4 is a cross-sectional view along the cross-section IV-IV of Fig. 1. As shown in Fig. 4, a lower fourth bead 78 is formed on each of the second flange members 64, 66 above the lower vertical groove 80. Each of the lower fourth beads 78 is formed below the respective upper fourth bead 46. The lower fourth bead 78 has a shape and dimensions symmetric to those of the fourth bead 46, with respect to the boundary X. The upper fourth bead 46 and lower fourth bead 78 form a space between a first side wall 19b side end part of the first flange member 21 and a second side wall 62b side end part of the second flange member 64. Further, the upper fourth bead 46 and the lower fourth bead 78 form a space between the first side wall 19b side end part of the first flange member 20 and the second side wall 62b side end part of the second flange member 66.
The dimensions of the beads 68, 72, 74, 78 become smaller in the order of: the lower first bead 68, the lower second bead 72, the lower third bead 74, the lower fourth bead 78. The dimensions of the lower third bead 74 may be the same as those of the lower fourth bead 78.

As shown in Fig. 1, the first flange member 21 and second flange member 64 are joined by four joining points 36 by spot welding. The joining points 36 are located, in the axial direction of the tube wall 18, at a front end part of the first flange member 21, between the first beads 28, 68 and the third beads 38, 74, between the third beads 38, 74 and the fourth beads 46, 78, and at a rear end part of the first flange member 21. The beads 28, 38, 46, 68, 74, 78 are formed, in the axial direction of the tube wall 18, in the sections where the first flange member 21 and the second flange member 64 are not joined; i.e., the spaces between the first side wall 19b side end parts of the first flange member 21 and the second side wall 62b side end parts of the second flange member 64 are formed in the sections where the first flange member 21 and the second flange member 64 are not joined. Further, the joining points 36 located between the beads are at the same location as the upper grooves 34 (lower grooves 71) in the axial direction of the tube wall 18.

The first flange member 20 and the second flange member 66 are joined by three joining points 36 by spot welding. The joining points 36 are located between the second beads 24, 72 and the third beads 38, 74, between the third beads 38, 74 and the fourth beads 46, 78, and at a rear end part of the first flange member 20. The beads 28, 38, 46, 68, 74, 78 are formed, in the axial direction of the tube wall 18, in the sections where the first flange member 20 and the second flange member 66 are not joined. The spaces between the first side wall 19b side end parts of the first flange member 20 and the second side wall 62b side end parts of the second flange member 66 are formed in the sections where the first flange member 20 and the second flange member 66 are not joined. Further, the joining points 36 located between the beads are at the same location as the upper grooves 34 (lower grooves 71) in the axial direction of the tube wall 18.

If an object collides with the front side of the vehicle while the impact absorbing member 10 is attached to the main body of the vehicle, the impact absorbing member 10 absorbs the impact energy as a result of the impact absorbing member 10 deforming compressively in the axial direction of the tube wall 18. Because the upper vertical grooves 26, 70 are concaved to the inner side of the tube wall 18, the space formed by the first beads 28, 68 deforms in a closing direction during an initial application of compressive load to the impact absorbing member 10. Consequently, the outer end parts of the first flange member 21 and second flange member 64 mutually separate at the location where the space is formed (the location where the first beads 28, 68 are formed). Similarly, the space formed by the second beads 24, 72 deforms in a closing direction, and the outer end parts of the first flange member 20 and second flange member 66 mutually separate at the location where the space is formed (the location where the second beads 24, 72 are formed). The flange members 20, 21, 64, 66 begin to deform at the location where the space is formed. It is thus possible to specify the location where deformation occurs when the compressive load is initially applied to the flange members. In a case where further compressive load is applied from this state, the flange members 20, 21, 64, 66 deform further at the location where deformation had already begun, and they buckle. A similar phenomenon occurs at the locations where the third beads 38, 74 are formed and the fourth beads 46, 78 are formed. The locations where the flange members 20, 21, 64, 66 are joined by the joining points 36 remain in the same plane after buckling as before buckling. Consequently, it is possible to reduce variation between products in the location where buckling of the flange member 17 occurs and in the deformation state or deformation process. It is thereby possible to reduce variation between products in the relationship between the compressive load on the impact absorbing member 10 and the degree of compressive deformation.

During the initial application of compressive load, the load is greatest at the location where the load acts, i.e. the front side of the vehicle. In the impact absorbing member 10, the beads 24, 28, 68, 72 that are located at the front end side in the axial direction of the tube wall 18 are larger than the beads located at the rear end side in the axial direction of the tube wall 18. Consequently, in the impact absorbing member 10, the side at the front of the vehicle deforms readily. It is thereby possible to prevent variation between products in the location where deformation of the flange members 16 occurs during the initial application of compressive load.
Further, in the impact absorbing member 10, the upper vertical grooves 26, 40, 48 are each formed in the first side walls 19b in locations corresponding to the beads 24, 28, 38, 46 formed on the first flange members 20, 21. Further, the lower vertical grooves 70, 76, 80 are each formed in the second side walls 62b in locations corresponding to the beads 68, 72, 74, 78 formed on the second flange members 64, 66. When the impact absorbing member 10 is deformed compressively by the compressive load, the first side walls 19b, 62b readily deform at the inner side of the tube wall 18 at the locations where the upper vertical grooves 26, 40, 48 and the lower vertical grooves 70, 76, 80 are formed. Variation between products in the deformation state and deformation process of the impact absorbing member 10 can thereby be controlled.

Further, in the impact absorbing member 10, the upper groove 34 is formed in the upper wall 19a, and the lower groove 71 is formed in the lower wall 62a. The upper groove 34 is disposed away from the upper vertical grooves 26, 40, 48 in the axial direction of the tube wall 18. The lower groove 71 is disposed away from the lower vertical grooves 70, 76, 80 in the axial direction of the tube wall 18. When the impact absorbing member 10 is deformed by a load, the upper wall 19a and lower wall 62a readily deform into a concaving shape towards the inner side of the tube wall 18 at the locations where the upper groove 34 and lower groove 71 are formed. Further, at the locations where the upper vertical grooves 26, 40, 48, 70, 76, 80 are formed, the upper walls 19a, 62a readily deform into a convexing shape toward the outer side of the tube due to the first side walls 19b, 62b being concaved towards the inner side of the tube wall 18. Variation between products in the deformation state or deformation process of compressive deformation of the tube wall 18 can thereby be controlled.

Variants of the impact absorbing member 10 will be listed.
In the impact absorbing member 10, the upper first bead 28 formed on the first flange member 21 is disposed at the same location as the upper second bead 24 formed on the first flange member 20 relative to the axial direction of the tube wall 18. However, the location of the upper first bead 28 and upper second bead 24 may differ relative to the axial direction of the tube wall 18. Similarly, the beads that are formed at the same location relative to the axial direction of the tube wall 18 on the impact absorbing member 10 may be formed at different locations.
In the impact absorbing member 10, the joining points 36 of the first flange member 20 and second flange member 66 and the joining points 36 of the first flange member 21 and second flange member 64 are disposed in the same location relative to the axial direction of the tube wall 18. However, the joining points 36 of the first flange member 20 and second flange member 66 and the joining points 36 of the first flange member 21 and second flange member 64 may be disposed in differing locations relative to the axial direction of the tube wall 18.

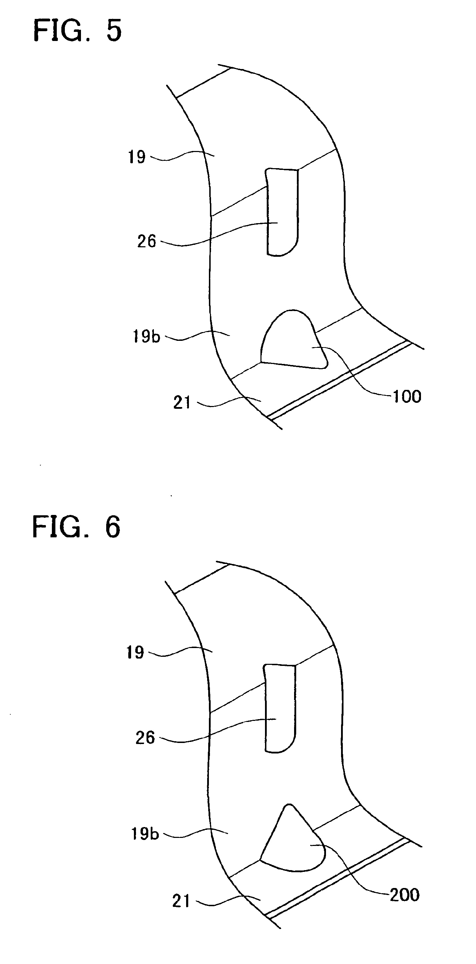

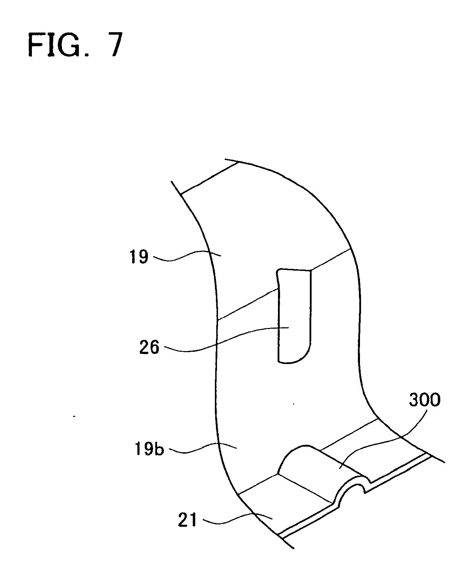

Further, the location, dimensions and shape of the beads may be changed in response to the required amount of strength, deformation, etc. The shape of the bead may be as follows. As exemplified in Fig. 5, a bead 100 may have a semi-conical shape of which a bottom surface is located on the first side wall 19b, and which extends towards an outer side of the first partial tube wall 19. Alternatively, e.g., as shown in Fig. 6, a bead 200 may have a semi-conical shape of which a bottom surface is located on the first flange member 21, and which extends along the first side wall 19b. Alternatively, as shown in Fig. 7, a bead 300 may have a semi-circular shape which extends toward the outer side of the first partial tube wall 19.
Further, the shape of all the beads may be identical; alternately, some of the beads may have a differing shape from the other beads.
Further, in the impact absorbing member 10, the tube wall 18 forms a square tube. However, the tube formed by the tube wall need not be square. It may, e.g., be round, or a polygonal shape other than square: e.g., hexagonal, octagonal, etc.

## Claims

1. An impact absorbing member (10) comprising a tube wall (18) composing a tube, and flange members (16) extending outward from an outer circumference of the tube wall (18) and also extending in an axial direction of the tube, wherein one end of the impact absorbing member (10) in the axial direction is attached to a main body of a vehicle, and the tube wall (18) and the flange members (16) are deformed compressively along the axial direction upon collision of the vehicle, the impact absorbing member (10) comprising:
at least a first main body (17) and a second main body (60), wherein
the first main body (17) comprises a first partial tube wall (19) that divides the tube wall (18) in a circumferential direction, and first flange members (20, 21) extending toward an outer side of the tube from both ends in a circumferential direction of the first partial tube wall (19), and also extending in the axial direction of the tube,
the second main body (60) comprises a second partial tube wall (62) that divides the tube wall (18) in a circumferential direction, and second flange members (64, 66) extending toward the outer side of the tube from both ends in a circumferential direction of the second partial tube wall (18), and also extending in the axial direction of the tube,
the first flange members (20, 21) and the second flange members (64, 66) are joined intermittently in the axial direction of the tube,
in at least one of sections where the first flange members (20, 21) and the second flange members (64, 66) are not joined in the axial direction of the tube, a first bead (24, 28, 38, 46, 100, 200, 300) and a second bead (68, 72, 74, 78, 100, 200, 300) are located, wherein the first bead (24, 28, 38, 46, 100, 200, 300), which is projected toward a direction away from the second flange member (64, 66), is located on a first partial tube wall side end part of the first flange member (20, 21), and the second bead (68, 72, 74, 78, 100, 200, 300), which is projected toward a direction away from the first flange member (20, 21), is located on the a second partial tube wall side end part of the second flange member (64, 66),
the first bead (24, 28, 38, 46, 100, 200, 300) and second bead (68, 72, 74, 78, 100, 200, 300) are located at a same position in the axial direction of the tube, and have a shape and dimensions symmetric with respect to a boundary plane (X) between the first flange members (20, 21) and second flange members (64, 66), and
a space is formed between the first partial tube wall side end part of the first flange member (20, 21) and the second partial tube wall side end part of the second flange member (64, 66) by the first bead (24, 28, 38, 46, 100, 200, 300) and second bead (68, 72, 74, 78, 100, 200, 300).

2. The impact absorbing member (10) as in claim 1, wherein
one space is formed in each of the sections, and
a space located furthest from the main body of the vehicle is larger than other spaces.

3. The impact absorbing member (10) as in claim 1 or 2, wherein
the spaces become smaller as they become more distant from the tube wall (10).

4. The impact absorbing member (10) as in one of claims 1 to 3, wherein
cross-sections in the axial direction of the tube of the first bead (24, 28, 38, 46, 100, 200, 300) and second bead (68, 72, 74, 78, 100, 200, 300) are triangular shapes or semi-circular arcs.

## Patentansprüche

1. Aufprallabsorbierendes Bauteil (10) mit einer Rohrwand (18), die ein Rohr bildet, und Flanschteilen (16), die sich von dem Außenumfang der Rohrwand (18) auswärts erstrecken und sich auch in axialer Richtung des Rohrs erstrecken, wobei ein axiales Ende des aufprallabsorbierenden Bauteils (10) an einem Hauptkörper eines Fahrzeugs befestigt ist, und die Rohrwand (18) und die Flanschteile (16) längs der axialen Richtung bei einem Aufprall des Fahrzeugs druckmäßig verformt werden, welches aufprallabsorbierende Bauteil (10) enthält:
wenigstens einen ersten Hauptkörper (17) und einen zweiten Hauptkörper (60), wobei
der erste Hauptkörper (17) eine erste Teilrohrwand (19), die die Rohrwand (18) in Umfangsrichtung unterteilt, und erste Flanschteile (20, 21) enthält, die sich zur Außenseite des Rohrs von beiden Enden in Umfangsrichtung der ersten Teilrohrwand (19) erstrecken und sich auch in axialer Richtung des Rohrs erstrecken,
der zweite Hautkörper (60) eine zweite Teilrohrwand (62), die die Rohrwand in Umfangsrichtung unterteilt, und zweite Flanschteile (64, 66) enthält, die sich zur Außenseite des Rohrs von beiden Enden in Umfangsrichtung der zweiten Teilrohrwand (18) erstrecken und sich auch in axialer Richtung des Rohrs erstrecken,
die ersten Flanschteile (20, 21) und die zweiten Flanschteile (64, 66) intermittierend in axialer Richtung des Rohrs verbunden sind,
in wenigstens einer von Sektionen, wo die ersten Flanschteile (20, 21) und die zweiten Flanschteile (64, 66) nicht in axialer Richtung des Rohrs verbunden sind, ein erster Wulst (24, 28, 38, 46, 100, 200, 300) und ein zweiter Wulst (68, 72, 74, 78, 100, 200, 300) angeordnet sind, wobei der erste Wulst (24, 28, 38, 46, 100, 200, 300), der in einer Richtung weg von dem zweiten Flanschteil (64, 66) vorsteht, an einem ersten teilrohrwandseitigen Endteil des ersten Flanschteils (20, 21) angeordnet ist und der zweite Wulst (68, 72, 74, 78, 100, 200, 300), der in einer Richtung weg von dem ersten Flanschteil (20, 21) vorsteht, an einem zweiten teilrohrwandseitigen Endteil des zweiten Flanschteils (64, 66) angeordnet ist,
der erste Wulst (24, 28, 38, 46, 100, 200, 300) und der zweite Wulst (68, 72, 74, 78, 100, 200, 300) in axialer Richtung des Rohrs an gleicher Stelle angeordnet sind und eine bezüglich einer Begrenzungsebene (X) zwischen den ersten Flanschbauteilen (20, 21) und den zweiten Flanschbauteilen (64, 66) symmetrische Gestalt und Abmessungen haben, und
ein Zwischenraum zwischen dem ersten teilwandrohrseitigen Endteil des ersten Flanschteils (20, 21) und dem zweiten teilrohrwandseitigen Endteil des zweiten Flanschteils (64, 66) von dem ersten Wulst (24, 28, 38, 46, 100, 200, 300) und dem zweiten Wulst (68, 72, 74, 78, 100, 200, 300) gebildet ist.

2. Aufprallabsorbierendes Bauteil (10) nach Anspruch 1, wobei
in jeder der Sektionen ein Zwischenraum gebildet ist und ein am weitesten von dem Hauptkörper des Fahrzeugs weg angeordneter Zwischenraum größer als die anderen Zwischenräume ist.

3. Aufprallabsorbierendes Bauteil (10) nach Anspruch 1 oder 2, wobei
die Zwischenräume mit zunehmender Entfernung von der Rohrwand (10) kleiner werden.

4. Aufprallabsorbierendes Bauteil (10) nach einem der Ansprüche 1 bis 3, wobei
Querschnitte in axialer Richtung des Rohres des ersten Wulstes (24, 28, 38, 46, 100, 200, 300) und des zweiten Wulstes (68, 72, 74, 78, 100, 200, 300) dreieckige oder halbkreisbogenförmige Gestalt haben.

## Revendications

1. L'invention concerne un élément d'absorption de chocs (10) comprenant une paroi de tube (18) composant un tube, et des éléments de rebord (16) s'étendant vers l'extérieur depuis une circonférence externe de la paroi de tube (18) et s'étendant également dans une direction axiale du tube, où une extrémité de l'élément d'absorption de chocs (10) en direction axiale est rattachée à un corps principale du véhicule, et la paroi de tube (18) et les éléments de rebord (16) sont déformés par compression le long de la direction axiale en réponse à une collision du véhicule, l'élément d'absorption de chocs (10) comprenant :
au moins un premier corps principal (17) et un second corps principal (60), où :
le premier corps principal (17) comprend une première paroi de tube partielle (19) qui divise la paroi de tube (18) en direction circonférentielle, et les premiers éléments de rebord (20, 21) s'étendent vers un côté extérieur du tube à partir des deux extrémités en direction circonférentielle de la première paroi de tube partielle (19), et également d'étendant en direction axiale du tube,
le second corps principal (60) comprend une seconde paroi de tube partielle (62) qui divise la paroi de tube (18) en direction circonférentielle, et les seconds éléments de rebord (64, 66) s'étendent vers un côté extérieur du tube à partir des deux extrémités en direction circonférentielle de la seconde paroi de tube partielle (18), et également d'étendant en direction axiale du tube,
les premiers éléments de rebord (20, 21) et les seconds éléments de rebord (64, 66) sont joints par intermittence en direction axiale du tube,
un premier bourrelet (24, 28, 38, 46, 100, 200, 300) et un second bourrelet (68, 72, 74, 78, 100, 200, 300) sont logés dans au moins une des sections, dans laquelle les premiers éléments de rebord (20, 21) et les seconds éléments de rebord (64, 66) ne sont pas joints en direction axiale du tube, où le premier bourrelet (24, 28, 38, 46, 100, 200, 300), lequel est projeté vers une direction en éloignement du second élément de rebord (64, 66), est logé sur une partie d'extrémité du côté de la première paroi de tube partielle du premier élément de rebord (20, 21), et le second bourrelet (68, 72, 74, 78, 100, 200, 300), lequel est projeté vers une direction en éloignement du premier élément de rebord (20, 21), est logé sur une partie d'extrémité du côté de la seconde paroi de tube partielle du second élément de rebord (64, 66),
le premier bourrelet (24, 28, 38, 46, 100, 200, 300) et le second bourrelet (68, 72, 74, 78, 100, 200, 300) sont logés au niveau de la même position en direction axiale du tube, et présentent une forme et des dimensions symétriques par rapport à un plan de limite (X) entre les premiers éléments de rebord (20, 21) et les seconds éléments de rebord (64, 66), et
un espace est formé entre partie d'extrémité du côté de la première paroi de tube partielle du premier élément de rebord (20, 21) et la partie d'extrémité du côté de la seconde paroi de tube partielle du second élément de rebord (64, 66) par le premier bourrelet (24, 28, 38, 46, 100, 200, 300) et le second bourrelet (68, 72, 74, 78, 100, 200, 300).

2. L'élément d'absorption de chocs (10) selon la revendication 1 dans lequel :
un espace est formé dans chacune des sections, et
un espace le plus éloigné du corps principal du véhicule est plus large que d'autres espaces.

3. L'élément d'absorption de chocs (10) selon la revendication 1 ou 2, dans lequel :
les espaces deviennent plus étroits lorsqu'ils sont plus distants de la paroi de tube (10).

4. L'élément d'absorption de chocs (10) selon une des revendications de 1 à 3, dans lequel :
les sections transversales en direction axiale du tube du premier bourrelet (24, 28, 38, 46, 100, 200, 300) et second bourrelet (68, 72, 74, 78, 100, 200, 300) ont une forme triangulaire ou une forme d'arc semi-circulaire.
